# EUROPEAN PATENT APPLICATION

(11) **EP 4 668 397 A2**
(43) Date of publication of application: **24.12.2025**
(21) Application number: 25211605.8
(22) Date of filing: 19.11.2020
(51) Int. Cl.: H01M 10/0525

(54) **METHOD FOR PRODUCING POSITIVE ELECTRODE ACTIVE MATERIAL FOR LITHIUM SECONDARY BATTERY AND POSITIVE ELECTRODE POSITIVE MATERIAL PRODUCED THEREBY**

(30) Priority: 22.11.2019 KR 20190151077
(62) Divisional of application: 20889802.3
(71) Applicant: LG Chem, Ltd., Seoul 07336 (KR)
(72) Inventor: JUNG, Won Sig, 34122 Daejeon (KR); PARK, Hyun Ah, 34122 Daejeon (KR); YOON, Yeo June, 34122 Daejeon (KR); LEE, Kang Hyeon, 34122 Daejeon (KR)
(74) Representative: Hoffmann Eitle

(57) **Abstract**

The present invention relates to a method for producing a positive electrode active material, the method including washing a lithium transition metal oxide with a washing solution, and solid-phase mixing the washed lithium transition metal oxide and a metal phosphate compound having a melting point of 500°C or lower, followed by performing heat treatment to form a coating layer on the surface of the lithium transition metal oxide.

## Description

### TECHNICAL FIELD

### Cross-reference to Related Applications

This application claims the benefit of Korean Patent Application No. 10-2019-0151077, filed on November 22, 2019, in the Korean Intellectual Property Office, the disclosure of which is incorporated herein in its entirety by reference.

### Technical Field

The present invention relates to a method for producing a positive electrode active material for a lithium secondary battery, a positive electrode for a lithium secondary battery including the positive electrode active material produced thereby, and a lithium secondary battery.

### BACKGROUND ART

As technology development and demand for mobile devices have increased, the demand for secondary batteries as an energy source has been rapidly increased. Among such secondary batteries, lithium secondary batteries having high energy density and voltage, long cycle life, and low self-discharging rate have been commercialized and widely used.

As a positive electrode active material of a lithium secondary battery, a lithium transition metal oxide is used. Among such lithium transition metal oxides, a lithium-cobalt oxide, such as LiCoO₂, which has a high functional voltage and excellent capacity properties has been mainly used. However, LiCoO₂ has very poor in thermal properties due to the destabilization of a crystal structure according to de-lithium, and is also expensive. Therefore, LiCoO₂ has a limitation in being used as a power source in a field such as an electric vehicle or the like in a large amount.

As a material to replace LiCoO₂, a lithium manganese composite metal oxide (LiMnO₂, LiMn₂O₄, and the like), a lithium iron phosphate compound (LiFePO₄ and the like), or a lithium nickel composite metal oxide (LiNiO₂ and the like) and the like has been developed. Among the above materials, research and development has been actively conducted on a lithium nickel composite metal oxide which has a high reversible capacity of about 200 mAh/g, thereby easily implementing a high capacity battery. However, when compared with LiCoO₂, LiNiO₂ has a lower thermal stability, and has a problem in that when an internal short circuit occurs due to external pressure or the like in a charged state, a positive electrode active material itself is decomposed, causing the rupture and ignition of a battery. Accordingly, as a method for improving the thermal stability of LiNiO₂, which is low, while maintaining the excellent reversible capacity thereof, LiNi_{1-α}Co_{α}O₂ (α=0.1~0.3), in which a part of nickel is substituted with cobalt, or a lithium-nickel-cobalt metal oxide, in which a part of nickel is substituted with Mn, Co, or Al, has been developed.

The surface of the lithium-nickel-cobalt metal oxide has electrically neutral surface properties. On the other hand, an electrolyte solution used in a secondary battery uses an organic solvent exhibiting electrical polarity. As a result, there is a problem in that at an interface formed between the positive electrode active material and the electrolyte solution, potential energy required to allow Li energy to pass increases, thereby acting as ion conduction resistance, and the charge/discharge capacity of the secondary battery decreases.

Therefore, there is a demand for the development of a positive electrode active material which may lower the potential energy of an interface formed between the positive electrode active material and the electrolyte solution described above.

### DISCLOSURE OF THE INVENTION

### TECHNICAL PROBLEM

In order to solve the above problem, a first aspect of the present invention provides a method for producing a positive electrode active material, the method in which a specific coating layer is formed between a positive electrode active material and an electrolyte solution to lower the potential energy of an interface between the positive electrode active material-electrolyte solution.

A second aspect of the present invention provides a positive electrode active material having lowered potential energy at an interface between a positive electrode active material-electrolyte solution by the formation of a coating layer.

A third aspect of the present invention provides a positive electrode for a lithium secondary battery including the positive electrode active material produced by the above-described production method.

A fourth aspect of the present invention provides a lithium secondary battery including the positive electrode.

### TECHNICAL SOLUTION

According to an aspect of the present invention, there is provided a method for producing a positive electrode active material, the method including washing a lithium transition metal with a washing solution, and solid-phase mixing the washed lithium transition metal oxide and a Brønsted solid acid, followed by performing heat treatment to form a coating layer on the surface of the lithium transition metal oxide. At this time, the Brønsted solid acid is a metal phosphate compound having a melting point of 500°C or lower, and the coating layer is formed to have a thickness of 80 nm or less.

According to another aspect of the present invention, there is provided a positive electrode active material including a lithium transition metal oxide, and a coating layer positioned on the surface of the lithium transition metal oxide and formed by a reaction between a metal phosphate compound having a melting point of 500°C or lower and lithium of the lithium transition metal oxide, wherein the thickness of the coating layer is 80 nm or less.

According to another aspect of the present invention, there is provided a positive electrode for a lithium secondary battery including the positive electrode active material.

According to another aspect of the present invention, there is provided a lithium secondary battery including the positive electrode for a lithium secondary battery.

### ADVANTAGEOUS EFFECTS

In the present invention, a lithium transition metal oxide and a Brønsted solid acid are reacted to form a coating layer on the surface of the lithium transition metal oxide, so that the surface of a positive electrode active material has polarity. As a result, potential energy required for the passage of Li ions at an interface between the positive electrode active material and an electrolyte solution is lowered. Accordingly, when the positive electrode active material of the present invention is applied to a secondary battery, excellent capacity properties and resistance properties may be obtained compared to the prior art.

In addition, in the present invention, a phosphoric acid compound having excellent reactivity with lithium is used as a Brønsted solid acid, which is a coating material, so that the formation of a coating layer may be facilitated.

In addition, in the present invention, a material having a melting point of 500°C or lower is used as a Brønsted solid acid, so that a coating layer may be formed through solid-phase mixing at a relatively low heat-treatment temperature. As a result, it is possible to suppress the damage or deformation of a lithium transition metal oxide caused by a solvent or heat during a process of forming the coating layer. Accordingly, the positive electrode active material produced through the method of the present invention has more excellent capacity properties, lifespan properties, and resistance properties compared to a typical positive electrode active material having a coating layer formed by a wet coating method.

In addition, the method for producing a positive electrode active material of the present invention appropriately adjusts the content of residual lithium and hydroxyl groups on the surface of a lithium transition metal oxide through washing, thereby increasing reactivity with a Brønsted solid acid. As a result, a uniform coating layer may be formed even by a dry coating method, and the thickness of the coating layer may be appropriately adjusted.

### BRIEF DESCRIPTION OF THE DRAWINGS

FIG. 1 is a view for describing the polarity of a surface before and after the formation of a coating layer of a positive electrode active material according to the present invention;
FIG. 2 is TOF-SIMS data on a positive electrode active material produced in each of Examples 1 to 4; and
FIG. 3 is an SIMS data of a positive electrode active material produced in Comparative Example 2.

### BEST MODE FOR CARRYING OUT THE INVENTION

Hereinafter, the present invention will be described in more detail.

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

### Method for producing positive electrode active material

In order to develop a positive electrode active material having improved electrochemical physical properties, the present inventors have repeatedly conducted studies and found that when a lithium transition metal oxide is reacted with a specific Brønsted solid acid to form a coating layer, potential energy at an interface between the lithium transition metal oxide and an electrolyte solution may be lowered, and have completed the present invention.

Specifically, a method for producing a positive electrode active material of the present invention includes (1) washing a lithium transition metal oxide with a washing solution, and (2) solid-phase mixing the washed lithium transition metal oxide and a Brønsted solid acid, followed by performing heat treatment to form a coating layer on the surface of the lithium transition metal oxide, wherein a metal(M) phosphate compound having a melting point of 500°C or lower is used as the Brønsted solid acid, and the coating layer is formed to have a thickness of 80 nm or less.

Hereinafter, the method for producing a positive electrode active material according to the present invention will be described in more detail.

First, a lithium transition metal oxide is washed with a washing solution (Step 1).

The washing is to reduce residual lithium on the surface of the lithium transition metal oxide, and to increase reactivity with a Brønsted solid acid in a coating step to be described later.

A lithium transition metal oxide used as a positive electrode active material is typically prepared by mixing a precursor in the form of a transition metal hydroxide with a lithium raw material, followed by firing. When the precursor and the lithium raw material are mixed, the lithium raw material is typically added in excess compared to an amount thereof stoichiometrically required. As a result, there is residual lithium present on the surface of the lithium transition metal oxide after the firing.

When there is residual lithium present in excess on the surface of the lithium transition metal oxide, the residual lithium reacts with an electrolyte solution after being applied to a battery, thereby causing side effects such as swelling, gas generation, and the like, which may cause expansion and ignition of the battery. In addition, the residual lithium acts as a material for forming a coating layer in a coating layer forming process to be described later, so that when there is residual lithium present in excess on the surface of the lithium transition metal oxide, there is a problem in that a thick coating layer is formed, and as a result, resistance increases.

Therefore, in the present invention, a lithium transition metal oxide is washed with a washing solution to reduce the amount of residual lithium on the surface of the lithium transition metal oxide, thereby minimizing the occurrence of the side effects described above.

Preferably, the washing may be performed such that the content of lithium by-products present on the lithium transition metal oxide is 0.5 wt% or less, preferably 0.01 wt% to 0.5 wt%, more preferably 0.1 wt% to 0.5 wt% based on a total weight of the lithium transition metal oxide. At this time, the content of the lithium by-products may be, for example, the sum of the contents of lithium carbonate (Li₂CO₃) and lithium hydroxide (LiOH) present on the lithium transition metal oxide. When the content of the lithium by-products present on the lithium transition metal oxide satisfy the above range, a side effect such as swelling and gas generation may be suppressed, and a coating layer may be formed to a thickness in a desired range.

Meanwhile, as the washing solution, typical washing solutions used for the washing of a positive electrode active material, for example, an organic solvent such as water and alcohol, and a combination thereof, may be used. However, the type thereof is not particularly limited.

Meanwhile, the washing may be performed by mixing the lithium transition metal oxide and the washing solution at a weight ratio of greater than 1:0.5 to 1:2 or less, preferably 1:0.6 to 1:2, more preferably 1:0.8 to 1:1.2, followed by stirring. When the mixing ratio of the lithium transition metal oxide and the washing solution satisfies the above range, lithium by-products are effectively removed and at the same time, a hydroxyl group(-OH) is generated on the surface of the lithium transition metal oxide, so that there may be an effect of improving reactivity with a Brønsted solid acid in a coating process to be described later.

Meanwhile, although not necessary, a weak acid solution may be additionally added at the time of the washing. When the washing is performed by additionally adding a weak acid, there may be an effect of increasing the efficiency of removing lithium carbonate (Li₂CO₃) . The lithium carbonate generates a gas such as CO, CO₂, and the like at the beginning of driving a secondary battery. Therefore, the higher the efficiency of removing the lithium carbonate, the more excellent the effect of suppressing the generation of a gas and swelling.

The weak acid solution may be, for example, a solution including one or more selected from the group consisting of phosphoric acid, acetic acid, oxalic acid, and boric acid.

The weak acid solution may be added such that the pH of a mixture of the lithium transition metal oxide and the washing solution is 8 to 10, preferably 8.5 to 9.5. When an input amount of a weak acid solution satisfies the above range, lithium carbonate may be effectively removed without the damage of a lithium transition metal oxide.

Next, the washed lithium transition metal oxide and a Brønsted solid acid are solid-phase mixed, and then heat treated to form a coating layer (Step 2).

At this time, as the Brønsted solid acid, a metal(M) phosphate compound having a melting point of 500°C or lower is used. Specifically, the Brønsted solid acid may be BiPO₄.

Since a metal (M) phosphate compound has good reactivity with lithium, when the metal phosphate compound is applied as a Brønsted solid acid, lithium present in a lithium transition metal oxide and the Brønsted solid acid react, so that a coating layer may be easily formed.

However, even if it is a metal phosphate compound, when a compound having a high melting point, such as AlPO₄ and CoPO₄, is used, it is difficult to form a coating layer through dry coating using solid-phase mixing. Therefore, typically, a wet coating method has been mainly used to form a coating layer including the metal phosphate described above. However, when a coating layer is formed through a wet coating method, not only a coating process is complicated, but also there may be problems such as the elution of a transition metal of a lithium transition metal oxide caused by a coating solution or the generation a surface defect.

Meanwhile, when a coating layer is formed by a dry coating method using a metal phosphate compound having a high melting point, high-temperature heat treatment is required to bond the metal phosphate compound on the surface of a lithium transition metal oxide. However, when the temperature of heat treatment for forming a coating layer is too high, the crystal structure of the lithium transition metal oxide is deformed, which is not preferable.

On the contrary, when a metal(M) phosphate compound having a melting point of 500°C or lower is used as in the present invention, a uniform coating layer may be formed even when heat treatment is performed at a low temperature of 300°C to 500°C, so that it is possible to prevent the lithium transition metal oxide to be damaged or deformed due to the heat treatment.

Meanwhile, the Brønsted solid acid may be added in an amount of 500 to 3,000 ppm, preferably 500 to 2,000 ppm, most preferably 500 to 1,000 ppm based on a total weight of the lithium transition metal oxide. When the content of the Brønsted solid acid is too high, the content of lithium of the lithium transition metal oxide decreases, so that the physical properties of a positive electrode active material may be degraded. When the content is too low, a coating layer is not sufficiently formed, so that an effect of improving the physical properties is insignificant.

Next, the Brønsted solid acid and lithium of the lithium transition metal oxide are reacted through heat treatment to form a coating layer. When heat treatment is performed after mixing a metal(M) phosphate compound having a melting point of 500°C or lower and a lithium transition metal oxide as in the present invention, the metal(M) phosphate compound is melted and reacted with lithium present inside the lithium transition metal oxide and/or the surface thereof, thereby forming a Li-M-P-O complex, resulting in forming a coating layer. At this time, M means a metal element derived from a metal phosphate compound. That is, when BiPO₄ is used as the Brønsted solid acid, the M is Bi.

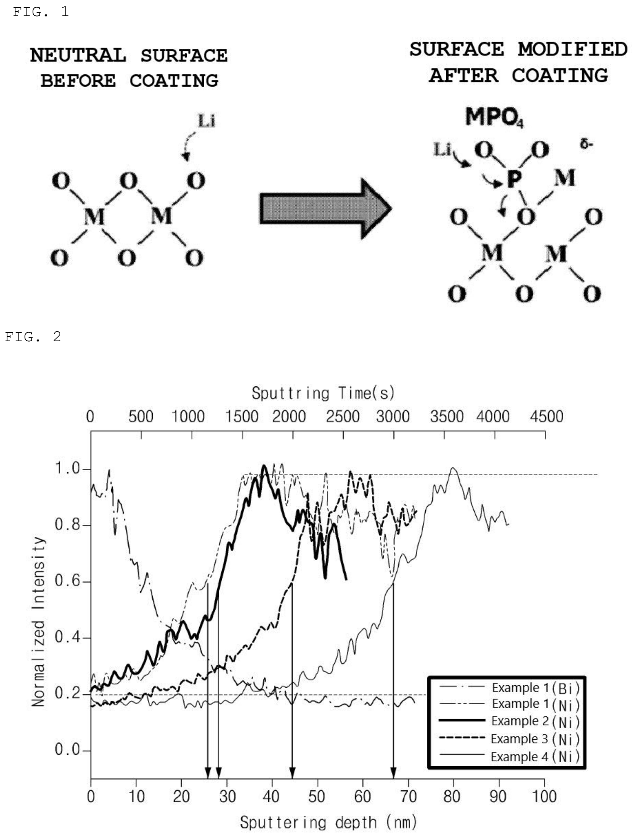

Meanwhile, the surface of the coating layer formed according to the method of the present invention has polarity. FIG. 1 illustrates a view showing the state of the surface a positive electrode active material modified through the formation of a coating layer. As illustrated in FIG. 1, the surface of a lithium transition metal oxide before the formation of a coating layer is electrically neutral. However, when the lithium transition metal oxide and a Brønsted solid acid are mixed, and then heat treated, the Brønsted solid acid is melted and reacted with lithium present inside the lithium transition metal oxide and residual lithium present on the surface of the lithium transition metal oxide, thereby forming an ion on the surface thereof, thereby forming an ionic bond or a covalent bond, resulting in forming a coating layer, and the coating layer is electrically negatively charged(δ-). When a coating layer whose surface has polarity is formed, the coating layer serves to be a surfactant connecting the surface of a lithium transition metal oxide and a polar electrolyte solution, thereby lowering the potential energy of an interface between the lithium transition metal oxide and the electrolyte solution, so that there may be an effect of improving lithium mobility.

Meanwhile, the heat treatment may be performed at a temperature of 300°C to 500°C, preferably 300°C to 400°C, more preferably 330°C to 380°C. When the temperature of heat treatment satisfies the above range, the formation of a coating layer may be facilitated without the damage of a lithium transition metal oxide.

Meanwhile, according to the present invention, the thickness of the coating layer may be 80 nm or less, preferably 5 nm to 80 nm, most preferably 5 nm to 40 nm. The thickness of the coating layer may be measured through, for example, a time-of-flight secondary ion mass spectrometer(TOF-SIMS). Specifically, in the present invention, the thickness of a coating layer may be the sputtering depth at a midpoint between minimum and maximum values of the normalized intensity of an Ni element according to a sputtering depth measured by sputtering a positive electrode active material by using a time-of-flight secondary ion mass spectrometer.

When the thickness of the coating layer is greater than 80 nm, the content of lithium in a lithium transition metal oxide decreases, so that capacity properties are degraded, and due to an increase in the thickness of the coating layer, lithium ion mobility is decreased and resistance is increased, so that an effect of improving physical properties may not be achieved. Meanwhile, the thickness of the coating layer varies depending on whether washing is performed or not, the input amount of a Brønsted solid acid, the temperature of heat treatment, and the like, so that a coating layer having a desired thickness may be formed by adjusting the above conditions.

### Positive electrode active material

In addition, the present invention provides a positive electrode active material produced by the above-described production method.

Specifically, the positive electrode active material according to the present invention includes a lithium transition metal oxide, and a coating layer positioned on the surface of the lithium transition metal oxide and formed by a reaction between a metal phosphate compound having a melting point of 500°C or lower and lithium of the lithium transition metal oxide. At this time, the thickness of the coating layer is 80 nm or less.

The lithium transition metal oxide may include one represented by Formula 1 below.

[Formula 1] Li₁₊ₐNᵢₓCo_{y}M1_{z}M2_{w}O₂

In Formula 1 above, -0.2≤a≤0.2, 0<x<1, 0<y<1, 0<z<1, and 0≤w≤0.1, preferably -0.1≤a≤0.1, 0.5≤x<1, 0<y≤0.40, 0<z≤0.40, and 0≤w≤0.05, most preferably -0.1≤a≤0.1, 0.7≤x<1, 0<y≤0.25, 0<z≤0.25, and 0≤w≤0.05, M1 includes at least one of Mn and Al, and M2 is one or more selected from the group consisting of W, Cu, Fe, V, Cr, It, Zr, Zn, Al, In, Ta, Y, La, Sr, Ga, Sc, Gd, Sm, Ca, Ce, Nb, Mg, B, and Mo.

Meanwhile, the coating layer is formed by a reaction between a metal(M) phosphate compound having a melting point of 500°C or lower and lithium of the lithium transition metal oxide, and includes a complex of Li-M-P-O. At this time, the metal phosphate compound may be, for example, BiPO₄. In this case, the coating layer may include a complex of Li-Bi-P-O, which is a lithium-metal phosphate compound.

Meanwhile, in the positive electrode active material of the present invention, the thickness of the coating layer may be 80 nm or less, preferably 5 nm to 80 nm, most preferably 5 nm to 40 nm. The thickness of the coating layer may be measured through, for example, a time-of-flight secondary ion mass spectrometer(TOF-SIMS).

When the thickness of a coating layer is greater than 80 nm, the content of lithium in a lithium transition metal oxide decreases, so that capacity properties are degraded, and due to an increase in the thickness of the coating layer, lithium ion mobility is decreased and resistance is increased, so that an effect of improving physical properties may not be achieved.

### Positive electrode

In addition, the present invention provides a positive electrode for a lithium secondary battery, the positive electrode including the above-described positive electrode active material.

Specifically, the positive electrode includes a positive electrode current collector and a positive electrode active material layer formed on at least one surface of the positive electrode current collector and including the above-described positive electrode active material.

The positive electrode current collector is not particularly limited as long as it has conductivity without causing a chemical change in a battery. For example, stainless steel, aluminum, nickel, titanium, fired carbon, or aluminum or stainless steel that is surface-treated with one of carbon, nickel, titanium, silver, and the like may be used. Also, the positive electrode current collector may typically have a thickness of 3 to 500 µm, and microscopic irregularities may be formed on the surface of the current collector to improve the adhesion of a positive electrode active material. For example, the positive electrode current collector may be used in various forms such as a film, a sheet, a foil, a net, a porous body, a foam, and a non-woven body.

The positive electrode active material layer may include a conductive material and a binder, together with a positive electrode active material.

At this time, the positive electrode active material may be included in an amount of 80 to 99 wt%, more specifically 85 to 98 wt% based on the total weight of the positive electrode active material layer. When included in the above content range, excellent capacity properties may be exhibited.

At this time, the conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fiber; metal powder or metal fiber of such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 1 to 30 wt% based on the total weight of the positive electrode active material layer.

The binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used. The binder may be included in an amount of 1 to 30 wt% based on the total weight of the positive electrode active material layer.

The positive electrode may be manufactured according to a typical method for manufacturing a positive electrode except that the positive electrode active material described above is used. Specifically, the positive electrode may be manufactured by applying a composition for forming a positive electrode active material layer, which is prepared by dissolving or dispersing the positive electrode active material described above and selectively, a binder and a conductive material in a solvent, on a positive electrode current collector, followed by drying and roll-pressing. At this time, the type and content of the positive electrode active material, the binder, and the conductive material are as described above.

The solvent may be a solvent commonly used in the art, and may be dimethyl sulfoxide (DMSO), isopropyl alcohol, N-methylpyrrolidone (NMP), acetone, water, or the like. Any one thereof or a mixture of two or more thereof may be used. The amount of the solvent to be used is sufficient if the solvent may dissolve and disperse the positive electrode active material, the binder, and the conductive material in consideration of the applying thickness of a slurry and preparation yield, and thereafter, have a viscosity which may exhibit excellent thickness uniformity during application for manufacturing a positive electrode.

In addition, in another method, the positive electrode may be manufactured by casting the composition for forming a positive electrode active material layer on a separate support and then laminating a film obtained by being peeled off from the support on a positive electrode current collector.

### Lithium secondary battery

In addition, the present invention may manufacture an electrochemical device including the positive electrode. The electrochemical device may be specifically a battery, a capacitor, or the like, and more specifically, may be a lithium secondary battery.

Specifically, the lithium secondary battery includes a positive electrode, a negative electrode positioned to face the positive electrode, a separator interposed between the positive electrode and the negative electrode, and an electrolyte. The positive electrode is the same as that described above, and thus, a detailed description thereof will be omitted. Hereinafter, only the rest of the components will be described in detail.

Also, the lithium secondary battery may selectively further include a battery case for accommodating an electrode assembly composed of the positive electrode, the negative electrode, and the separator, and a sealing member for sealing the battery case.

In the lithium secondary battery, the negative electrode includes a negative electrode current collector and a negative electrode active material layer positioned on the negative electrode current collector.

The negative electrode current collector is not particularly limited as long as it has a high conductivity without causing a chemical change in a battery. For example, copper, stainless steel, aluminum, nickel, titanium, fired carbon, copper or stainless steel that is surface-treated with one of carbon, nickel, titanium, silver, and the like, an aluminum-cadmium alloy, and the like may be used. Also, the negative electrode current collector may typically have a thickness of 3 µm to 500 µm, and as in the case of the positive electrode current collector, microscopic irregularities may be formed on the surface of the negative electrode current collector to improve the adhesion of a negative electrode active material. For example, the negative electrode current collector may be used in various forms such as a film, a sheet, a foil, a net, a porous body, a foam, and a non-woven body.

The negative electrode active material layer selectively includes a binder and a conductive material in addition to a negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic compound alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as SiO_{β} (0 < β < 2), SnO₂, a vanadium oxide, and a lithium vanadium oxide; or a composite including the metallic compound and the carbonaceous material such as an Si-C composite or an Sn-C composite, and any one thereof or a mixture of two or more thereof may be used. Also, a metal lithium thin film may be used as the negative electrode active material. Furthermore, low crystalline carbon, high crystalline carbon and the like may all be used as a carbon material. Representative examples of the low crystalline carbon may include soft carbon and hard carbon, and representative examples of the high crystalline carbon may include irregular, planar, flaky, spherical, or fibrous natural graphite or artificial graphite, Kish graphite, pyrolytic carbon, mesophase pitch-based carbon fiber, meso-carbon microbeads, mesophase pitches, and high-temperature sintered carbon such as petroleum or coal tar pitch derived cokes.

The negative electrode active material may be included in an amount of 80 parts by weight to 99 parts by weight based on a total weight of 100 part by weight of a negative electrode active material layer.

The binder is a component for assisting in bonding between a conductive material, an active material, and a current collector, and is typically added in an amount of 0.1 parts by weight to 10 parts by weight based on a total weight of 100 parts by weight of a negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber, nitrile-butadiene rubber, fluorine rubber, various copolymers thereof, and the like.

The conductive material is a component for further improving the conductivity of a negative electrode active material, and may be added in an amount of 10 parts by weight or less, specifically 5 parts by weight, based on a total weight of 100 parts by weight of the negative electrode active material layer. The conductive material is not particularly limited as long as it has conductivity without causing a chemical change in the battery. For example, graphite such as natural graphite or artificial graphite; carbon black such as acetylene black, Ketjen black, channel black, furnace black, lamp black, and thermal black; conductive fiber such as carbon fiber and metal fiber; metal powder such as fluorocarbon powder, aluminum powder, and nickel powder; a conductive whisker such as zinc oxide and potassium titanate; a conductive metal oxide such as titanium oxide; or a conductive material such as a polyphenylene derivative, and the like may be used.

For example, the negative electrode active material layer may be prepared by applying a negative electrode mixture material, which is prepared by dissolving or dispersing a negative electrode active material and selectively a binder and a conductive material in a solvent, on a negative electrode current collector, followed by drying. Alternatively, the negative electrode active material layer may be prepared by casting the negative electrode mixture material on a separate support, and then laminating a film peeled off from the support on a negative electrode current collector.

The negative electrode active material layer may be prepared by, for example, applying a negative electrode mixture material, which is prepared by dissolving or dispersing a negative electrode active material and selectively a binder and a conductive material in a solvent, on a negative electrode current collector, followed by drying. Alternatively, the negative electrode active material layer may be prepared by casting the negative electrode mixture material on a separate support, and then laminating a film peeled off from the support on a negative electrode current collector.

Meanwhile, in the lithium secondary battery, a separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Also, a coated separator including a ceramic component or a polymer material may be used to secure heat resistance or mechanical strength, and may be selectively used in a single-layered or a multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a lithium secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate

(DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable. In this case, the performance of the electrolyte solution may be excellent when the cyclic carbonate and the chain carbonate are mixed in a volume ratio of about 1:1 to about 1:9.

Any compound may be used as the lithium salt without particular limitation as long as it may provide lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The lithium salt may be used in a concentration range of 0.1 M to 2.0 M. When the concentration of the lithium salt is in the above range, the electrolyte has suitable conductivity and viscosity, thereby exhibiting excellent performance, and lithium ions may effectively move.

In the electrolyte, in order to improve the lifespan properties of a battery, suppress the decrease in battery capacity, and improve the discharge capacity of the battery, one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included. At this time, the additive may be included in an amount of 0.1 to 5 parts by weight based on a total weight of 100 parts by weight of the electrolyte.

The lithium secondary battery including the positive electrode active material according to the present invention as describe above stably exhibits excellent discharging capacity, output properties, and lifespan properties, and thus, are useful for portable devices such as a mobile phone, a notebook computer, and a digital camera, and in the field of electric cars such as a hybrid electric vehicle (HEV).

Accordingly, according to another embodiment of the present invention, a battery module including the lithium secondary battery as a unit cell, and a battery pack including the same are provided.

The battery module or the battery pack may be used as a power source of one or more medium-and-large-sized devices, for example, a power tool, an electric car such as an electric vehicle (EV), a hybrid electric vehicle (HEV), and a plug-in hybrid electric vehicle (PHEV), or a power storage system.

The external shape of the lithium secondary battery of the present invention is not particularly limited, but may be a cylindrical shape using a can, a square shape, a pouch shape, a coin shape, or the like.

The lithium secondary battery according to the present invention may be used in a battery cell which is used as a power source for a small-sized device, and may also be preferably used as a unit cell for a medium- and large-sized battery module including a plurality of battery cells.

### MODE FOR CARRYING OUT THE INVENTION

Hereinafter, the present invention will be described in detail with reference to embodiments. However, the embodiments according to the present invention may be modified into other various forms, and the scope of the present invention should not be construed as being limited to the embodiments described below. The embodiments of the present invention are provided to more fully describe the present invention to those skilled in the art.

### Example 1

A lithium transition metal oxide represented by LiNi_{0.8}Co_{0.1}Mn_{0.1}O₂ was mixed with water at a weight ratio of 1:1, followed by washing for 5 minutes. Next, the washed lithium transition metal oxide was mixed with 1,000 ppm of BiPO₄, which was a Brønsted solid acid, and then the mixture was heat treated for 5 hours at 350°C to produce a positive electrode active material having a coating layer.

### Example 2

A lithium transition metal oxide represented by LiNi_{0.8}Co_{0.1}Mn_{0.1}O₂ was mixed with water at a weight ratio of 1:1, and then a P₂O₅ aqueous solution having a concentration of 10 wt% was added thereto until a pH 9 was reached, followed by washing for 5 minutes. Next, the washed lithium transition metal oxide was mixed with 1,000 ppm of BiPO₄, which was a Brønsted solid acid, and then the mixture was heat treated for 5 hours at 350°C to produce a positive electrode active material having a coating layer.

### Example 3

A positive electrode active material having a coating layer was produced in the same manner as in Example 1 except that 2,000 ppm of BiPO₄ was mixed.

### Example 4

A positive electrode active material having a coating layer was produced in the same manner as in Example 1 except that 3,000 ppm of BiPO₄ was mixed.

### Example 5

A positive electrode active material having a coating layer was produced in the same manner as in Example 1 except that the heat treatment was performed for 5 hours at 300°C.

### Example 6

A positive electrode active material having a coating layer was produced in the same manner as in Example 1 except that the heat treatment was performed for 5 hours at 400°C.

### Comparative Example 1

A positive electrode was manufactured in the same manner as in Example 1 except that a coating layer was not formed.

### Comparative Example 2

A positive electrode active material having a coating layer was produced in the same manner as in Example 1 except that 10,000 ppm of BiPO₄ was mixed.

### Comparative Example 3

A lithium transition metal oxide represented by LiNi_{0.8}Co_{0.1}Mn_{0.1}O₂ was mixed with water at a weight ratio of 1:1, followed by washing for 5 minutes. Next, the washed lithium transition metal oxide was mixed with 1,000 ppm of AlPO₄ having a melting point of 1800°C, which was a Bronsted solid acid, and the mixture was heat treated for 5 hours at 700°C to produce a positive electrode active material having a coating layer.

### Comparative Example 4

A lithium transition metal oxide represented by LiNi_{0.8}Co_{0.1}Mn_{0.1}O₂ was mixed with 1,000 ppm of BiPO₄ without performing a washing process, and then the mixture was heat treated for 5 hours at 350°C to produce a positive electrode active material having a coating layer.

### Experimental Example 1

A sample of the lithium transition metal oxide used in each of Examples 1 and 2 before the washing and a sample thereof after the washing were collected, and the content of lithium by-products was measured through a pH titration method.

Specifically, 50 g of each sample was added into 50 mL of distilled water and then stirred to prepare a solution for measurement. Thereafter, a pH was measured while titrating the solution for measurement with a 0.1 M HCl solution by 1 mL to obtain a titration curve, and the titration curve was used to calculate the contents of lithium carbonate and lithium hydroxide. The measurement results are shown in Table 1 below.

**[Table 1]**

| | Before washing | | After washing | |
|---|---|---|---|---|
| | Li₂CO₃ (wt%) | LiOH (wt%) | Li₂CO₃ (wt%) | LiOH (wt%) |
| Example 1 | 0.398 | 0.518 | 0.133 | 0.254 |
| Example 2 | 0.382 | 0.521 | 0.095 | 0.238 |

Through Table 1 above, it can be confirmed that the content of lithium by-products was reduced through the washing, and it can be confirmed that the ratio of lithium carbonate (Li₂CO₃) was further lowered when a weak acid solution was added at the time of the washing as in Example 2.

### Experimental Example 2

Properties of the positive electrode active material produced in each of Examples 1 to 6 and Comparative Examples 1 to 4 were measured by the following method.

### (1) Coating layer thickness measurement

The thickness of the coating layer in the positive electrode active material produced in each of Examples 1 to 6 and Comparative Examples 2 to 4 was measured using a time-of-flight secondary ion mass spectrometer (TOF-SIMS, IONTOF Co., Ltd). Specifically, the normalized intensity of an Ni element according to a sputtering depth was measured while sputtering the positive electrode active material by using a time-of-flight secondary ion mass spectrometer, and in consideration of a measurement error, the sputtering depth at a midpoint between minimum and maximum values of the intensity of the Ni element was determined as the thickness of the coating layer. The measurement results are shown in [Table 2] below.

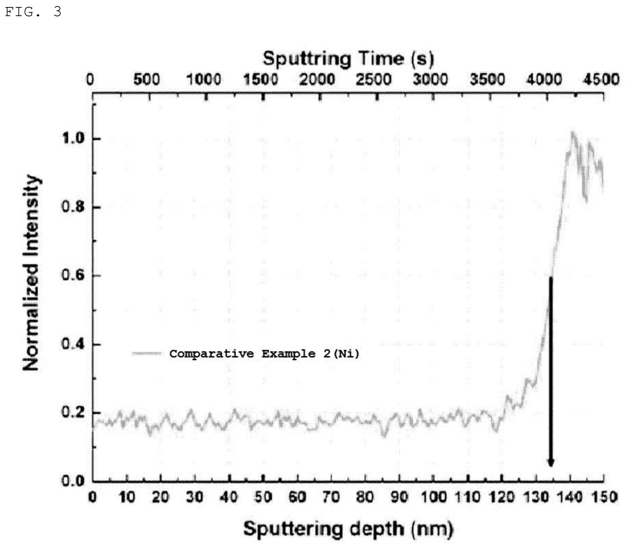

In addition, for reference, the TOF-SIMS measurement data of Examples 1 to 4 is illustrated in FIG. 2, and the TOF-SIMS measurement data of Comparative Example 2 is illustrated in FIG. 3.

**[Table 2]**

| | Whether washing is performed or not | Brønsted solid acid type, input amount (ppm) | Heat-treatment temperature (°C) | Coating layer thickness (nm) |
|---|---|---|---|---|
| Example 1 | O | BiPO₄, 1,000 | 350 | 25.5 |
| Example 2 | O | BiPO₄, 1,000 | 350 | 28.2 |
| Example 3 | O | BiPO₄, 2,000 | 350 | 44.3 |
| Example 4 | O | BiPO₄, 3,000 | 350 | 66.5 |
| Example 5 | O | BiPO₄, 1,000 | 300 | 9.8 |
| Example 6 | O | BiPO₄, 1,000 | 400 | 18.6 |
| Comparative Example 2 | O | BiPO₄, 10,000 | 350 | 132.2 |
| Comparative Example 3 | O | AlPO₄, 1,000 | 700 | 38.6 |
| Comparative Example 4 | X | BiPO₄, 1,000 | 350 | 114.2 |

As shown in Table 2 above, the positive electrode active material produced in each of Examples 1 to 6 of the present invention has a coating layer whose thickness is 80 nm or less. However, in the Comparative Example 2, a Brønsted solid acid was added in excess, so that it can be confirmed that a thick coating layer was formed to a thickness of 132 nm or greater. Meanwhile, in the case of Comparative Example 3, AlPO₄ whose melting point is high was used, so that high-temperature heat treatment of 700°C or higher was required to form a coating layer. In addition, in the case of Comparative Example 4 in which a coating layer was formed without performing a washing process, due to an excessive amount of lithium by-products on the surface of the lithium transition metal oxide, a thick coating layer was formed even when the same amount of BiPO₄ was used as in Example 1.

### Experimental Example 3

Lithium secondary batteries were manufactured using the positive electrode active material produced in each of Examples 1 to 6 and Comparative Examples 1 to 4, and the capacity properties and resistance properties were evaluated for each of the lithium secondary batteries including the positive electrode active material of each of Examples 1 to 6 and Comparative Examples 1 to 4.

Specifically, the positive electrode active material produced in each of Examples 1 to 6 and Comparative Examples 1 to 4, a carbon black conductive material, and a polyvinylidene fluoride binder were mixed at a weight ratio of 97.5:1.0:1.5 in a N-methylpyrrolidone solvent to prepare a positive electrode slurry. The positive electrode slurry was applied on one surface of an aluminum current collector, dried at 130°C, and then roll-pressed to manufacture a positive electrode.

Meanwhile, a carbon black negative electrode active material and a polyvinylidene fluoride binder were mixed at a weight ratio of 97.5:2.5, and then added into a N-methylpyrrolidone solvent to prepare a negative electrode active material slurry. The negative electrode active material slurry was applied on a copper foil having a thickness of 16.5 µm, dried, and then roll-pressed to manufacture a negative electrode.

A porous polyethylene separator was interposed between the positive electrode and the negative electrode manufactured above to manufacture an electrode assembly, and the electrode assembly was placed inside a battery case. Thereafter, an electrolyte solution was injected into the inside of the case to manufacture a lithium secondary battery. At this time, as the electrolyte solution, an electrolyte solution prepared by dissolving 1 M of LiPF₆ in an organic solvent in which ethylene carbonate(EC), dimethyl carbonate(DMC), ethyl methyl carbonate(EMC) were mixed at a ratio of 3:4:3 was injected to manufacture a lithium secondary battery according to each of Examples 1 to 6 and Comparative Examples 1 to 4.

Each of the lithium secondary batteries manufactured as described above was charged to 4.25 V with a constant current of 0.2 C at 25°C, and was discharged to 2.5 V with a constant current of 0.2 C to measure an initial charge capacity and an initial discharge capacity.

Thereafter, each of the initially charged/discharged secondary batteries was charged to 4.25 V with a constant current of 0.33 C at 45°C, and was discharged to 2.5 V with a constant current of 0.33 C, which was set as 1 cycle, and 30 cycles of charge/discharge were performed to measure a capacity retention rate and a resistance increase rate. The measurement results are shown in Table 3 below.

**[Table 3]**

| | Initial charge capacity (mAh/g) | Initial discharge capacity (mAh/g) | Capacity retention rate (%) | Resistance increase rate (%) |
|---|---|---|---|---|
| Example 1 | 221.7 | 196.5 | 94.6 | 40.8 |
| Example 2 | 222.7 | 197.1 | 96.0 | 38.7 |
| Example 3 | 221.6 | 195.1 | 95.5 | 84.6 |
| Example 4 | 220.1 | 194.2 | 91.2 | 120.2 |
| Example 5 | 219.1 | 193.5 | 93.1 | 75.2 |
| Example 6 | 219.5 | 193.4 | 92.7 | 74.9 |
| Comparative Example 1 | 218.4 | 193.8 | 90.2 | 80.6 |
| Comparative Example 2 | 210.1 | 184.5 | 87.4 | 204.3 |
| Comparative Example 3 | 218.6 | 190.8 | 89.8 | 155.4 |
| Comparative Example 4 | 216.5 | 187.2 | 88.5 | 186.4 |

As shown in Table 3 above, it can be confirmed that in a case in which a coating layer including a Brønsted solid acid was not formed on a surface (Comparative Example 1), or the thickness of a coating layer was greater than 80 nm (Comparative Examples 2 and 4), the charge/discharge efficiency and the resistance increase rate thereof were both inferior to those of Examples 1 to 6. In addition, even in a case in which a coating layer was formed to a thickness of 80 nm or less but the coating layer was formed using a Brønsted solid acid having a high melting point (Comparative Example 3), the charge/discharge efficiency thereof was lower than that of Examples 1 to 6, and the resistance increase rate thereof was higher than that of Examples 1 to 6.
The present application is a divisional application from EP Application No. 20 889 802.3. The whole subject-matter of that application is incorporated herein by reference. The subject-matter defined by the original claims of EP Application No. 20 889 802.3 is disclosed again below by way of preferred embodiments [1] to [14]:

### PREFERRED EMBODIMENTS

1. A method for producing a positive electrode active material, comprising:
   washing a lithium transition metal oxide with a washing solution; and
   solid-phase mixing the washed lithium transition metal oxide and a Brønsted solid acid, followed by performing heat treatment to form a coating layer on the surface of the lithium transition metal oxide,
   wherein the Brønsted solid acid is a metal phosphate compound having a melting point of 500°C or lower, and the coating layer is formed to have a thickness of 80 nm or less.
2. The method of embodiment 1, wherein the Bronsted solid acid is BiPO₄.
3. The method of embodiment 1, wherein the washing is performed such that a content of lithium by-products present on the surface of the lithium transition metal oxide is 0.5 wt% or less.
4. The method of embodiment 1, wherein the coating layer is formed by a reaction between lithium of the lithium transition metal oxide and the Brønsted solid acid.
5. The method of embodiment 1, wherein the washing is performed by mixing the lithium transition metal oxide and the washing solution at a weight ratio of greater than 1:0.5 to less than 1:2.
6. The method of embodiment 1, wherein a weak acid solution is additionally added during the washing.
7. The method of embodiment 6, wherein the weak acid solution is one or more selected from the group consisting of phosphoric acid, acetic acid, oxalic acid, and boric acid.
8. The method of embodiment 1, wherein the Brønsted solid acid is mixed in 500 to 3,000 ppm based on a total weight of the lithium transition metal oxide.
9. The method of embodiment 1, wherein the Brønsted solid acid is mixed in 1,000 to 1,500 ppm based on a total weight of the lithium transition metal oxide.
10. The method of embodiment 1, wherein the heat treatment is performed at a temperature of 300°C to 500°C.
11. A positive electrode active material comprising:
   a lithium transition metal oxide; and
   a coating layer positioned on the surface of the lithium transition metal oxide and formed by a reaction between a metal phosphate compound having a melting point of 500°C or lower and lithium of the lithium transition metal oxide, wherein the thickness of the coating layer is 80 nm or less.
12. The positive electrode active material of embodiment 11, wherein the metal phosphate compound is BiPO₄, and the coating layer comprises Li-Bi-P-O complex.
13. A positive electrode for a lithium secondary battery comprising the positive electrode active material according to embodiment 11.
14. A lithium secondary battery comprising the positive electrode for a lithium secondary battery according to embodiment 13.

## Claims

1. A positive electrode active material comprising:
a lithium transition metal oxide; and
a coating layer positioned on the surface of the lithium transition metal oxide and formed by a reaction between a metal phosphate compound having a melting point of 500°C or lower and lithium of the lithium transition metal oxide, wherein the thickness of the coating layer is 80 nm or less.

2. The positive electrode active material of claim 1, wherein the metal phosphate compound is BiPO₄, and the coating layer comprises Li-Bi-P-O complex.

3. A positive electrode for a lithium secondary battery comprising the positive electrode active material according to claim 1.

4. A lithium secondary battery comprising the positive electrode for a lithium secondary battery according to claim 3.
